# Europäisches Patentamt

# European Patent Office

# Office européen des brevets

(19)

(11) Veröffentlichungsnummer: **0 097 275**
**B1**

(12) EUROPÄISCHE PATENTSCHRIFT

(45) Veröffentlichungstag der Patentschrift:
**23.10.85**

(21) Anmeldenummer: **83105546.2**

(22) Anmeldetag: **06.06.83**

(51) Int. Cl.⁴: **F 15 B 21/08, B 22 D 17/32**

(54) Verfahren zum Betrieb eines hydrostatischen oder pneumatischen Antriebs sowie Antrieb.

(30) Priorität: **11.06.82 DE 3222008**

(43) Veröffentlichungstag der Anmeldung:
**04.01.84 Patentblatt 84/1**

(45) Bekanntmachung des Hinweises auf die Patenterteilung:
**23.10.85 Patentblatt 85/43**

(84) Benannte Vertragsstaaten:
**DE FR GB IT SE**

(56) Entgegenhaltungen:
**DE - A - 2 808 694**
**DE - A - 2 902 264**
**FR - A - 2 299 103**

(73) Patentinhaber: **Vickers Systems GmbH,**
**Frölingstrasse 41, D-6380 Bad Homburg (DE)**

(72) Erfinder: **Siegrist, Ronald, Schlattwiesenstrasse 8,**
**CH-9242 Oberuzwil (CH)**

(74) Vertreter: **Blumbach Weser Bergen Kramer Zwirner**
**Hoffmann Patentanwälte, Sonnenbergerstrasse 43,**
**D-6200 Wiesbaden 1 (DE)**

**Beschreibung**

Die Erfindung bezieht sich auf ein Verfahren zum Betrieb eines hydrostatischen oder pneumatischen Antriebs für zu beschleunigende und abzubremsende Massen, enthaltend einen linearen oder rotativen Motor, eine hydraulische oder pneumatische Druckquelle und eine Ventilanordnung, deren Durchlaßöffnung zur Abgabe eines veränderbaren Arbeitsstroms steuerbar ist, der wechselnden Arbeitsdrücken unterliegt, so daß sich in Abhängigkeit von dem zu erwartenden Arbeitsdruck ein Kompressionsvolumen des hydraulischen oder pneumatischen Mediums gegenüber dem Ausgangszustand ergibt. Die Erfindung bezieht sich auch auf einen diesbezüglichen Antrieb, der mit einem Sollwert-Steuergenerator zur Steuerung der Ventilanordnung versehen ist.

Bei einer bekannten Steuereinrichtung für eine Hydraulikanlage (DE-A-2 902 264) ist durch definierte Zu- bzw. Abnahme des Druckmittelstroms eine definierte Beschleunigung bzw. Verzögerung des Antriebs erreichbar. Durch verschiedene elektronische Steuerglieder wird erreicht, daß Beschleunigungsstöße vermieden werden. Im einzelnen ist zwischen der Pumpe und dem Motor ein Vierwegeventil mit drei Schaltstellungen vorgesehen, welches elektrisch ansteuerbar ist und Rampenbildner in der elektrischen Steueranordnung enthält. Das Ausgangssignal des Rampenbildners wird einem elektrischen Schaltverstärker zugeführt, der das Wegeventil steuert. Eine Berücksichtigung der Tatsache der Kompressibilität der Hydraulikflüssigkeit und der Ausdehnung der Komponenten des Antriebs bei Druckzunahme erfolgt nicht.

Bei einer weiteren bekannten Positioniereinrichtung für einen hydraulischen Antrieb (DE-A-2 808 694) soll eine sprunghafte Geschwindigkeitsänderung vermieden werden. Aus diesem Grund ist ein Rampenbildner zwischen Sollwert-Steuergenerator und Istwert-Abtaster einerseits sowie elektrisch ansteuerbarem hydraulischem Stellglied andererseits vorgesehen. Eine Berücksichtigung des Kompressionsvolumens erfolgt dabei nicht.

Beim Spritzgießen ist es bekannt (FR-A-2 299 103), daß eine Spritzgußform zum Ende des Füllhubs langsamer gefüllt werden sollte, weil sich andernfalls eine Druckplatte ergeben würde. Deshalb wird vor Erreichen der vollständigen Füllung die Geschwindigkeit des Injektionskolbens der Spritzgießmaschine herabgesetzt.

In Druck- und Spritzgießmaschinen wird eine ruhende oder bewegte Masse mittels einer Kolben-Zylinder-Einheit angetrieben, um auf eine bestimmte Geschwindigkeit gebracht zu werden. Hierzu wird beispielsweise eine Drossel zunehmend aufgesteuert, um einen wachsenden Druck an den Kolben anzulegen, der die Masse antreibt. Die Hydraulikflüssigkeit ist jedoch nicht inkompressibel, auch können sich die Komponenten des Antriebs ausdehnen, insbesondere die hydraulischen Leitungen, so daß ein bestimmter Anteil des zugeführten Hydraulikstroms kapazitiv vom Antriebssystem aufgenommen wird und sich nicht unmittelbar in einer Verschiebung der Masse bemerkbar macht. Diese kapazitiv aufgenommene Hydraulikstrom repräsentiert eine gespannte Feder, die mit der Masse ein schwingungsfähiges Gebilde ergibt. Die Schwingungsanregung ist umso größer, je rascher man auf die gewünschte Endgeschwindigkeit zu kommen wünscht. Wenn man also den Sollwert-Steuergenerator mit einer steilen Rampe zwischen den verschiedenen Sollwerten betreibt, antwortet das System mit schwach gedämpften Schwingungen, d. h. der Druck pendelt sich nur allmählich auf seinen Sollwert ein, ebenso die Geschwindigkeit des Kolbens. In der Praxis wird deshalb eine Rampe in der Größenordnung von 400 ms eingehalten. Ferner ist die Ansicht vertreten worden, daß die Zykluszeit von Spritzgießmaschinen, in welche die Übergangsbereiche zwischen unterschiedlichen Geschwindigkeiten eingehen, nicht wesentlich reduziert werden kann (»Microelectronics in Injection Molding Machines« von Dr. W. Elbe und R. K. Jackson, Firmenschrift von Mannesmann-Demag und Mannesmann-Demag-Hamilton, insbesondere Seite 4).

Der Erfindung liegt die Aufgabe zugrunde, die Dynamik eines hydrostatischen oder pneumatischen Antriebs zu verbessern, um gegebenenfalls die Maschinenzykluszeit zu verkürzen und/oder die Beanspruchungen der Maschine herabzusetzen. Gegebenenfalls kann auch Antriebsenergie eingespart werden, weil zusätzliche, energieverbrauchende Dämpfungsmaßnahmen entfallen können. Im Fall von Druck- und Spritzgießmaschinen kann beispielsweise mit niedrigeren Gegendrücken gefahren werden.

Die Aufgabe wird aufgrund der Maßnahmen des Anspruchs 1 bzw. 6 gelöst.

Ein Ausführungsbeispiel der Erfindung wird anhand der Zeichnung beschrieben. Dabei zeigt

Fig. 1 einen erfindungsgemäßen Antrieb in schematischer Darstellung,

Fig. 2 ein Diagramm der Steuerspannung U, des Arbeitsstroms $Q_{11}$, der zeitlichen Ableitung D des Arbeitsstroms, der zugehörigen Drucks P, des abgeführten Hydraulikstroms $Q_{12}$, des zugehörigen Gegendrucks G, der Verschiebung S, der Geschwindigkeit V und der Beschleunigung B der Masse über der Zeit in ms,

Fig. 3 ein weiteres Diagramm des Steuerstroms U, des Arbeitsstroms $Q_{11}$, des zugehörigen Drucks P, des abgeführten Arbeitsstroms A, des zugehörigen Gegendrucks G und der Geschwindigkeit V über der Zeit t in ms.

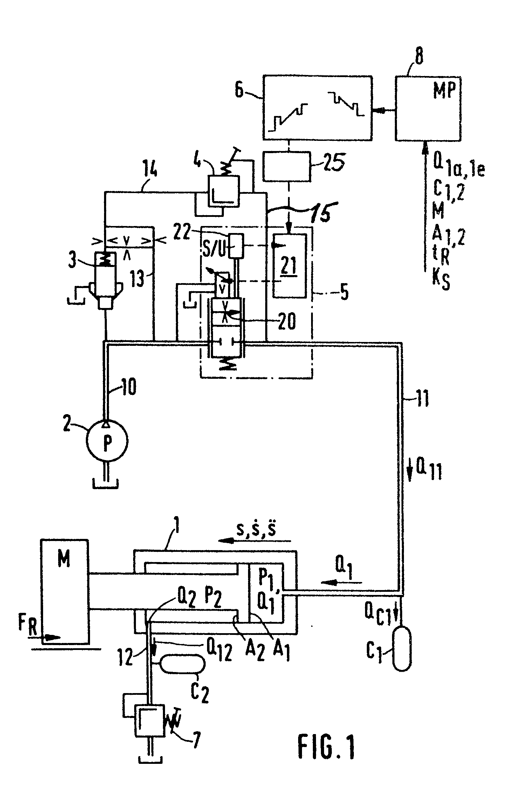

Die Hauptkomponenten der in Fig. 1 dargestellten Antriebsanordnung sind eine Kolben-Zylinder-Einheit 1 als hydrostatischer oder Verdrängermotor, eine Pumpe 2 und ein zugehöriges ansteuerbares Druckbegrenzungsventil 3 als eine hydraulische Druckquelle, ein Druckdifferenz-Konstanthalte-Ventil 4, eine elektrisch ansteuerbare Ventilanordnung 5 und ein Sollwert-Steuergenerator 6. An der Kolben-Zylinder-Einheit 1 kann ein Auslaßventil 7 angeschlossen sein. Es versteht sich, daß zur Absicherung des Systems übliche Druckbegrenzungsventile angeschlossen sein können, die ebenso wie eine weitere Pumpe mit Zusatzventilen für höheren Hydraulikstromverbrauch nicht dargestellt sind.

Die Pumpe 2 fördert Hydraulikflüssigkeit in eine Förderleitung 10 hinein, die sich durch die Ventilanordnung 5 erstreckt und als Eingangsleitung 11 zur Kolben-Zylinder-Einheit 1 weiterführt, deren Ausgangsleitung mit 12 bezeichnet ist. Der in der Förderleitung 10 sich aufbauende Druck wird über eine Steuerleitung 13 und eine Reihe von Drosseln der Rückseite des Ventils 3 zugeführt, die über eine weitere Steuerleitung 14 mit dem Ventil 4 verbunden ist. Über eine weitere Steuerleitung 15 ist eine Verbindung zur Eingangsleitung 11 geschaffen. Auf diese Weise liegt am Ventil 4 die Druckdifferenz an, die sich als Druckabfall an der Ventilanordnung 5 zwischen den Leitungen 10 und 11 ergibt. Wenn dieser Druckabfall einen bestimmten Wert von beispielsweise 2 bar übersteigt, öffnet das Ventil 4 und sorgt für eine Einregelung des Steuerdrucks am Ventil 3. Dieses versucht, die eingestellte Druckdifferenz von 2 bar aufrechtzuerhalten, d. h. wenn der Druck in der Leitung 10 gegenüber der Leitung 11 um mehr als 2 bar ansteigt, spricht das Ventil 3 an und entlastet die Leitung 10 dementsprechend. Es wird also ein konstanter Druckabfall an der Ventilanordnung 5 erzeugt.

Die Ventilanordnung 5 stellt eine sogenannte Proportionaldrossel dar, d. h. die Weite ihrer Drosselöffnung 20 hängt proportional von der Größe der zugeführten Sollwert-Steuerspannung U ab, wenn eine gewisse Regelzeit verflossen ist. Im einzelnen kann man dies dadurch erreichen, daß ein Sollwert-Istwert-Vergleicher 21 den von dem Steuergenerator 6 gelieferten Sollwert U mit dem Istwert der Drosselöffnung 20 vergleicht, der mittels eines Wegabtasters 22 gewonnen wird. Es wird so lange nachgeregelt, bis der Istwert mit dem Sollwert übereinstimmt. In der Praxis wird die Drosselöffnung 20 durch ein Hauptventil gebildet, das über ein Pilot- oder Vorsteuerventil gesteuert wird, was nicht im einzelnen erläutert werden muß.

Wenn man die Drossel 20 zunehmend öffnet, was durch ein rampenartig ansteigendes Sollwert-Signal U geschehen kann, erhöht sich der Druck in der Leitung 11, und der lineare Verdrängermotor 1 setzt sich in Bewegung. Es wird dabei aber nicht nur der Zylinderraum entsprechend einem Strom $Q_1$ vergrößert, sondern wegen der Kompressibilität der Hydraulikflüssigkeit und der Ausdehnung der Komponenten bei steigendem Druck wird gewissermaßen eine hydraulische Kapazität $C_1$ mit dem Strom $Q_{C1}$ gefüllt, der aus dem zugeführten Arbeitsstrom $Q_{11}$ mitgespeist wird. Das aufgenommene Volumen wird als Kompressionsvolumen $V_k$ bezeichnet. Die Kapazität $C_1$ stellt einen Energiespeicher im Sinne einer gespannten Feder dar und ergibt zusammen mit der anzutreibenden Masse M ein schwingungsfähiges Gebilde. Dieses kann zwar durch eine Bremse, gebildet durch den abgeführten Hydraulikstrom $Q_{12}$ und das drosselnde Auslaßventil 7, gedämpft werden, jedoch muß auch der Auslaßseite eine Kapazität $C_2$ zugesprochen werden, die wiederum einen Energiespeicher darstellt, der zu weiterer Schwingungsanregung Anlaß geben kann.

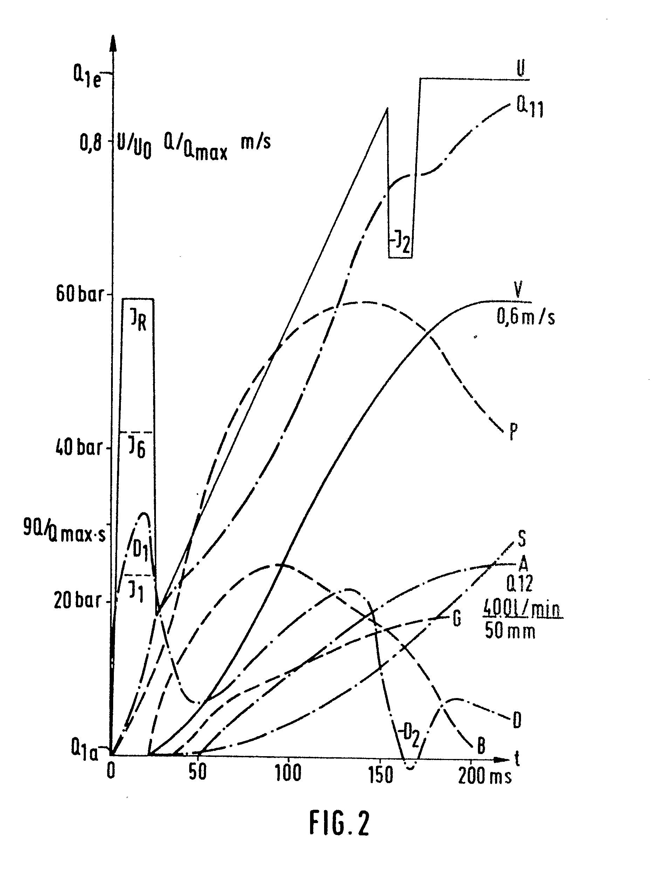

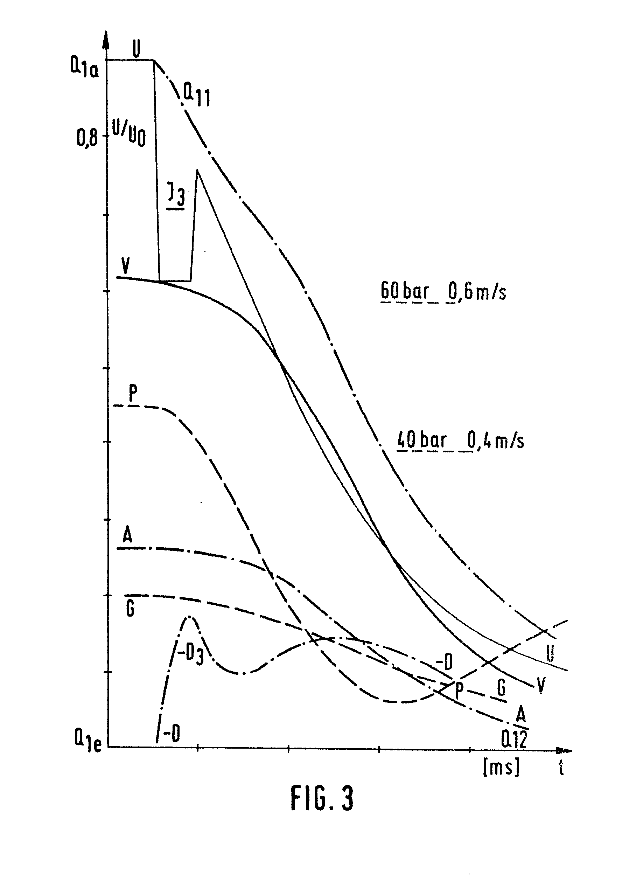

Überraschenderweise ist festgestellt worden, daß die Schwingungsanregung weitgehend vermieden wird, wenn die Sollwert-Steuerspannung U den in Fig. 2 bzw. 3 dargestellten Verlauf hat.

Der Sollwert-Spannungsgenerator 6 kann zwei Impulsgeneratoren zur Erzeugung des positiven und negativen Impulses sowie einen Rampengenerator enthalten, der gewissermaßen die Bezugsspannung für die Impulsgeneratoren liefert. Es kann sowohl die Impulsbreite als auch Impulshöhe der Impulsgeneratoren als auch die Rampensteilheit und Rampenhöhe des Rampengenerators eingestellt werden. Bei wechselnden Anforderungen, wie dies in Druck- und Spritzgießmaschinen der Fall ist, kann ein Mikroprozessor 8 vorgesehen sein, um die Impulsgeneratoren und den Rampengenerator entsprechend zu steuern. Auf diese Weise können die physikalischen Größen, die das Kompressionsvolumen $V_k$ bestimmen, für jeden Anwendungsfall genau berücksichtigt werden. Ferner kann bestimmt werden, ob zusätzliche Impulse $I_G$ und $I_R$ aufgeschaltet werden oder ob das Aufschalten eines Impulses gänzlich entfällt, wie dies beim Auslauf bzw. Formschluß der Fall ist.

Fig. 2 stellt eine zeitabhängige Spannungsrampe U dar, der beim Beginn des Rampenanstiegs ein positiver Steuerimpuls $I_1$ und am Ende des Rampenanstiegs ein negativer Steuerimpuls $I_2$ überlagert sind. Die Größe dieses positiven und negativen Steuerimpulses $I_1$ und $I_2$ hängt von dem jeweiligen Kompressionsvolumen $V_k$ ab, wie nachfolgend erläutert wird.

Wenn der Kolben des Motors 1 eine dem zugeführten Druck $p_1$ ausgesetzte Seite $A_1$ und eine abgewandte Seite $A_2$ mit dem Druck $p_2$ aufweist, kann für die Kräfte die folgende Gleichung aufgestellt werden:

$$M\ddot{s} = p_1 \cdot A_1 - p_2 \cdot A_2 - F_R.$$

Wenn man die Reibkraft $F_R$ und die Gegenkraft $G = p_2 \cdot A_2$ vernachlässigt, verbleibt als verkürzte Kraftgleichung

$$M\ddot{s} = p_1 \cdot A_1.$$

Die Drücke $p_1$, $p_2$ sind zeitlich nicht konstant, wodurch sich zeitlich ändernde kapazitive Hydraulikströme $Q_{C1}$ und $Q_{C2}$ entsprechend $Q_C = \dot{p} \cdot C$ ergeben. Die Geschwindigkeitsgleichung lautet damit:

$$\dot{s} = \frac{Q_1}{A_1} = \frac{Q_{11} - Q_{C1}}{A_1} = \frac{Q_{11} - \dot{p}_1 \cdot C_1}{A_1}.$$

Wenn sich der zugeführte Druck von einem Anfangswert $p_{1a}$ auf einen Endwert $p_{1e}$ ändert, ergibt sich das folgende Kompressionsvolumen:

$$V_k = (p_{1e} - p_{1a}) \cdot C_1$$

und eine verkürzte Kraftgleichung

$$M\ddot{s} = (p_{1e} - p_{1a}) \cdot A_1.$$

Wenn man eine rampenartig ansteigende Geschwindigkeit $\dot{s}_R$ während der Druckanstiegszeit $t_R$ und damit einen Anfangswert $Q_{1a}$ und einen Endwert $Q_{1e}$ des Hydraulikstroms $Q_1$ zugrundelegt, ergibt sich für die Beschleunigung $\ddot{s}_R$ folgendes:

$$\ddot{s}_R = \frac{\dot{s}_R}{t_R} = \frac{Q_{1a} - Q_{1e}}{A_1 \cdot t_R} = \frac{(p_{1e} - p_{1a}) \cdot A_1}{M}.$$

Daraus errechnet sich das Kompressionsvolumen zu:

$$V_k = \frac{(Q_{1e} - Q_{1a}) \cdot C_1 \cdot M}{A_1^2 \cdot t_R}.$$

Dieses Kompressionsvolumen $V_k$ wird gewissermaßen zu Beginn der Rampe aufgeschaltet, d. h. es wird ein Sollwert-Spannungsimpuls $I_1$ gegeben, dessen Inhalt diesem Kompressionsvolumen $V_k$ entspricht. Zur Berücksichtigung der Gegenkraft G und der Reibkraft $F_R$ werden zusätzliche Impulse $I_G$ und $I_R$ aufgeschaltet. Die Größe dieser Impulse $I_G$ und $I_R$ wird empirisch ermittelt.

Der Spannungsimpuls $I_2$ am Ende der Anstiegsrampe entspricht flächenmäßig dem Impuls $I_1$ wie errechnet. Wenn man die Werte M, $C_1$ und $A_1$ im Anwendungsfall als maschinengegeben annimmt, hängt die Impulsfläche $I_1$ bzw. $I_2$ nur von der Spannungsdifferenz und der Rampensteilheit der Sollwert-Spannung U ab. Wenn man also zur Verkürzung der Maschinenzykluszeit die Rampensteilheit erhöht, muß man einen umso größeren Impuls $I_1$ bzw. $I_2$ der Rampe überlagern. Daraus folgt, daß man bei einem zeitlich flachen Rampenteil einen geringen Spannungsimpuls zu überlagern hat, den man in einem solchen Fall auch fortlassen kann, wie in Fig. 3, rechte Diagrammseite, dargestellt.

Die Erfindung ist auch mit Bezug auf Wegrampen anwendbar. Die Größe des Impulses $I_3$ (Fig. 3) kann dabei durch analoge Betrachtungen ermittelt werden, und zwar zu:

$$I_3 = -\frac{Q_{1a} \cdot C_1 \cdot M \cdot K_S}{A_1^3}.$$

Dabei kennzeichnet $K_S$ das Gefälle der Rampenfunktion U, während die übrigen Symbole die bereits erläuterte Bedeutung haben. Aus Gründen der Darstellung ist jedoch die D-Kurve an der t-Koordinate gespiegelt, d. h. die Werte sind in Wirklichkeit negativ. Am Ende des Rampenabfalls sollte an sich ein positiver Impuls $I_4$ stehen. Da jedoch die Geschwindigkeit gegen 0 gehen soll, wird ein solcher Steuerimpuls der Sollwert-Steuerspannung nicht überlagert. Wenn dagegen auf eine endliche Geschwindigkeit heruntergefahren werden soll, wird ein solcher positiver Steuerimpuls $I_4$ angewendet.

In Fig. 2 sind die kennzeichnenden Werte des Antriebs für das Anfahren aus dem Stillstand wiedergegeben. Erst wenn sich ein gewisser Druck p aufgebaut hat, kommt die anzutreibende Masse in Bewegung. Die Beschleunigung B setzt ein, erreicht bei etwa der Rampenmittel ihren höchsten Wert und sinkt dann auf 0 herab. Die Kurve $Q_{11}$ des Arbeitsstroms folgt mit einer gewissen Verzögerung der Sollwert-Funktion U, ohne jedoch deren Sprünge mitmachen zu können. Die Änderung D des Arbeitsstroms spiegelt den Stoßcharakter der Antriebskräfte besser wieder, wie sich aus dem positiven Zacken $D_1$ entsprechend dem Impuls $I_1$ und dem negativ gerichteten Zacken $D_2$ entsprechend dem Impuls $I_2$ ergibt. Es muß als überraschend gelten, daß ein derartiger Impulscharakter Schwingungen des Systems weitgehend unterbindet, während normalerweise Antriebsimpulse zur Schwingungsanregung Anlaß geben.

Während die Sollwert-Funktion U in Fig. 2 als eine Analogfunktion dargestellt ist, ist es auch möglich, die Sollwert-Funktion durch Nadelimpulse nachzubilden und bereitzustellen. Die Sollwert-Funktion kann auch durch digitale Codierung dargeboten werden. In allen diesen Fällen wird die Ventilanordnung 5 so gesteuert, wie es das Analogsignal U in Fig. 2 angibt.

In der Ventilanordnung 5 kann anstelle einer einfachen Drosselöffnung 20 auch ein Drosselventil mit zwei Drosselkanten verwendet werden, um beispielsweise sowohl den zufließenden wie den abfließenden Hydraulikstrom zu beeinflussen. Die Steuerung des dem Motor zugeführten Hydraulikstroms braucht im übrigen nicht über ein konstantes Druckgefälle zu erfolgen; andere Steuerarten sind ebenfalls anwendbar. Wesentlich ist es, daß dem Hydraulikstrom zu Beginn eines Rampenanstiegs — bei seinem Ausgangswert $Q_{1a}$ — eine positive, stoßartige Volumenstromzunahme $D_1$ und am Ende des Rampenanstiegs — nahe dem Endwert $Q_{1e}$ — eine negative stoßartige Volumenstromabnahme — $D_2$ überlagert wird, wobei diese Volumenstöße — oder ein Anteil — im Verhältnis zum Kompressionsvolumen $V_k$ des Systems stehen. Die stoßartige Volumstromzunahme $D_1$ spiegelt auch die Existenz der Impulse $I_G$ und $I_R$ wieder. Der Impuls $I_1$ bzw. das Kompressionsvolumen $V_k$ repräsentieren somit nur einen Anteil von Gesamtinhalt des Volumenstoßes $D_1$. Der Impuls $I_3$ und der Volumenstoß $D_3$ entsprechen einander. Da die Steigung $K_3$ der Kurve v in Fig. 3 bei zunehmendem t gegen Null geht, wird $I_4$ und damit $D_4$ ebenfalls Null.

Die in Fig. 2 und 3 dargestellte Impulsform der

Steuerimpulse $I_1$, $I_2$, $I_3$ ist idealisiert; in Wirklichkeit sind die Steuerimpulse wegen des induktiven Widerstands des Stellmagneten der Proportionaldrossel der Ventilanordnung 5 abgeschliffen. Hinzu kommt noch die Masseträgheit des Ventilschiebers. Dieses Tiefpaßverhalten der Ventilanordnung 5 ist erwünscht. Wenn eine Ventilanordnung verwendet wird, die kein ausreichendes Tiefpaßverhalten zeigt (in diesem Fall würde der Stellbereich bzw. der Stellgeschwindigkeitsbereich des Ventils verletzt), dann wird ein Element mit Tiefpaßverhalten, z. B. ein analoges oder digitales Tiefpaßfilter 25 zwischen dem Signalerzeugungselement 6, 8 und der Ventilanordnung 5 geschaltet. Die Drosselöffnung 20 läßt dabei einen Hydraulikstrom $Q_{11}$ passieren, der zwar Wellungen zeigt (s. Fig. 2, 3), aber keine Einbrüche (unerwünschte Abnahme des Hydraulikstroms im zeitlichen Verlauf während eines generellen Stromanstiegs wie in Fig. 2).

**Patentansprüche**

1. Verfahren zum Betrieb eines hydrostatischen oder pneumatischen Antriebs für zu beschleunigende und abzubremsende Massen (M), enthaltend einen linearen oder rotativen Motor (1), eine hydraulische oder pneumatische Druckquelle (2, 3) und eine Ventilanordnung (5) deren Durchlaßöffnung (20) zur Abgabe eines veränderbaren Arbeitsstroms ($Q_{11}$) steuerbar ist, der wechselnden Arbeitsdrücken (p) unterliegt, so daß sich in Abhängigkeit von dem zu erwartenden Arbeitsdruck ein Kompressionsvolumen ($V_k$) des hydraulischen oder pneumatischen Mediums gegenüber dem Ausgangszustand ergibt, dadurch gekennzeichnet, daß die Änderung des Arbeitsstroms ($Q_{11}$) von einem Ausgangswert ($Q_{1a}$) zu einem Endwert ($Q_{1e}$) wie folgt erfolgt:
zunächst, bei einem Ausgangswert ($Q_{1a}$), erfolgt eine stoßartige Volumstromzunahme ($D_1$) bzw. -abnahme ($-D_3$), je nach dem Vorzeichen der Änderung;
dann, in mittleren Bereich, erfolgt eine allmähliche Änderung des Volumenstroms, ebenfalls in Übereinstimmung mit dem Vorzeichen der Änderung;
schließlich, nahe dem Endwert ($Q_{1e}$), erfolgt — je nach dem Vorzeichen der Änderung — eine stoßartige Volumenabnahme ($-D_2$) bzw. -zunahme, wobei die stoßartige Volumstromänderung ($D_1$, $-D_2$, $-D_3$) — oder ein Anteil der Volumstromänderung in Beziehung zum Kompressionsvolumen ($V_k$) gewählt ist.

2. Verfahren nach Anspruch 1, dadurch gekennzeichnet, daß die Änderung des Volumenstroms im mittleren Bereich zwischen Ausgangswert ($Q_{1a}$) und Endwert ($Q_{1e}$) mit einer Abnahme der absoluten Änderungsgeschwindigkeit beginnt und in eine Zunahme der absoluten Änderungsgeschwindigkeit übergeht.

3. Verfahren nach Anspruch 1 oder 2, dadurch gekennzeichnet, daß bei einer Zunahme des Arbeitsstroms ($Q_{11}$), insbesondere beim Anfahren einer ruhenden Masse (M), die stoßartige Volumenstromzunahme ($D_1$) einen Anteil zur Berücksichtigung von Gegendruck ($-G$) und Reibkraft ($F_R$) aufweist, also insgesamt größer ist als es dem Kompressionsvolumen ($V_K$) entspricht.

4. Verfahren nach Anspruch 1 bis 3, dadurch gekennzeichnet, daß bei einer Abnahme des Arbeitsstroms ($Q_{11}$), insbesondere bei Abnahme einer bewegten Masse (M), die stoßartige Volumenzunahme nahe dem Endwert ($Q_{1e}$) mit Rücksicht auf den schwindenden Gegendruck kleiner ist, als es dem Kompressionsvolumen ($V_K$) entspricht, insbesondere beim Abbremsen auf Null, die stoßartige Volumenzunahme entfällt.

5. Hydrostatischer oder pneumatischer Antrieb für zu beschleunigende und abzubremsende Massen (M) mit einem linearen oder rotativen Motor (1), mit einer hydraulischen oder pneumatischen Druckquelle (2, 3), mit einer Ventilanordnung (5), deren Durchlaßöffnung (20) zur Abgabe eines veränderbaren Arbeitsstroms ($Q_{11}$) steuerbar ist, der abwechselnden Arbeitsdrücken (p) unterliegt, so daß sich in Abhängigkeit von dem zu erwartenden Arbeitsdruck ein Kompressionsvolumen ($V_K$) des hydraulischen oder pneumatischen Mediums gegenüber dem Ausgangszustand ergibt und mit einem Sollwert-Steuergenerator (6) zur Steuerung der Ventilanordnung (5), dadurch gekennzeichnet, daß der Sollwert-Steuergenerator (6) ein weg- und zeitabhängiges Rampensignal (U) mit einem überlagerten positiven Steuerimpuls ($I_1$) bei Beginn des Rampenanstiegs bzw. am Ende des Rampenabfalls und mit einem überlagerten negativen Steuerimpuls ($I_2$) am Ende des Rampenanstiegs bzw. ($I_3$) am Anfang des Rampenabfalls abgibt, wobei die Größen der positiven und negativen Steuerimpulse in Abhängigkeit von dem jeweiligen Kompressionsvolumen ($V_K$) gewählt sind.

6. Antrieb nach Anspruch 5, dadurch gekennzeichnet, daß beim Anfahren einer ruhenden Masse (M) dem positiven Steuerimpuls ($I_1$) zur Berücksichtigung eines Gegendrucks (G) und von Reibkräften ($F_R$) weitere Impulse ($I_G$, $I_R$) überlagert werden.

7. Antrieb nach Anspruch 5 oder 6, dadurch gekennzeichnet, daß im Falle von auf Null abzubremsenden Massen der positive Steuerimpuls entfällt.

8. Antrieb nach einem der Ansprüche 5 bis 7, dadurch gekennzeichnet, daß der Sollwert-Steuergenerator (6) einen Impulsgenerator für positive Impulse, einen Impulsgenerator für negative Impulse und einen Rampengenerator umfaßt, deren Werte von außen einstellbar sind.

9. Antrieb nach Anspruch 8, dadurch gekennzeichnet, daß ein Mikroprozessor (8) zur Steuerung der Impulsgeneratoren und des Rampengenerators vorgesehen ist, wobei dem Mikroprozessor die Werte über den Eingangsstrom am Anfang und Ende der Rampe ($Q_{1e}$, $Q_{1a}$) die hydraulische Kapazität ($C_1$), die anzutreibende Masse (M), die Kolbenfläche ($A_{1,2}$) des Motors (1) und die zeitliche Rampenlänge ($t_R$) bzw. die

Steilheit der Rampe ($K_S$) zuführbar sind.

10. Antrieb nach einem der Ansprüche 5 bis 9, dadurch gekennzeichnet, daß zwischen Sollwert-Steuergenerator (6) und Ventilanordnung (5) ein Tiefpaßfilter (25) geschaltet ist.

## Claims

1. Method for operating a hydrostatic or pneumatic drive system for masses (M) to be accelerated and decelerated, containing a linear or rotary motor (1), an hydraulic or pneumatic pressure source (2, 3) and a valve arrangement (5), the flow opening (20) of which can be controlled to deliver a variable operating flow ($Q_{11}$) which is subject to varying operating pressures (p) so that a volume of compression ($V_k$) of the hydraulic or pneumatic medium is produced as a function of the operating pressure to be expected as compared with the initial state, characterised in that the change in the operating flow ($Q_{11}$) from an initial value ($Q_{1a}$) to a final value ($Q_{1e}$) takes place as follows:
initially, a sudden increase ($D_1$) or decrease ($-D_3$), depending on the sign of the change, in the volume flow takes place at an initial value ($Q_{1a}$);
then, in the centre region, the volume flow changes gradually, also in agreement with the sign of the change;
finally, near the final value ($Q_{1e}$), a sudden volume decrease ($-D_2$) or increase, depending on the sign of the change, takes place, the sudden volume flow change ($D_1$, $-D_2$, $-D_3$), or a proportion of the volume flow change, being selected in relation to the volume of compression ($V_k$).

2. Method according to Claim 1, characterised in that the change in volume flow in the centre region between the initial value ($Q_{1a}$) and the final value ($Q_{1e}$) begins with a decrease in the absolute rate of change and changes into an increase in the absolute rate of change.

3. Method according to Claim 1 or 2, characterised in that, with an increase in the operating flow ($Q_{11}$), particularly during the start-up of a mass (M) at rest, the sudden volume-flow increase ($D_1$) has a component for taking account of counter pressure ($-G$) and frictional force ($F_R$), that is to say is larger overall than corresponds to the volume of compression ($V_K$).

4. Method according to Claim 1 to 3, characterised in that with a decrease in the operating flow ($Q_{11}$), particularly with a decrease in a moving mass (M), the sudden volume increase near the final value ($Q_{1e}$) is smaller, with regard to the fading counter pressure, than corresponds to the volume of compression ($V_K$) and there is no sudden volume increase particularly with a deceleration to zero.

5. Hydrostatic or pneumatic drive system for masses (M) to be accelerated or decelerated, containing a linear or rotary motor (1), an hydraulic or pneumatic pressure source (2, 3), a valve arrangement (5) the flow opening (20) of which can be controlled for delivering a variable operating flow ($Q_{11}$) which is subject to alternating operating pressures (p) so that a volume of compression ($V_K$) of the hydraulic or pneumatic medium is produced as a function of the operating pressure to be expected, as compared with the initial state, and a set-value control generator (6) for controlling the valve arrangement (5), characterised in that the setvalue control generator (6) produces a distance- and timedependent ramp signal (U) including a superimposed positive control pulse ($I_1$) at the beginning of the ramp rise or at the end of the ramp drop and including a superimposed negative control pulse ($I_2$) at the end of the ramp rise or ($I_3$) at the beginning of the ramp drop, the magnitudes of the positive and negative control pulses being selected in dependence on the respective volume of compression ($V_K$).

6. Drive system according to Claim 5, characterised in that, when starting up a mass (M) at rest, further pulses ($I_G$, $I_R$) are superimposed on the positive control pulse ($I_1$) to take account of a counterpressure (G) and of frictional forces ($F_R$).

7. Drive system according to Claim 5 or 6, characterised in that there is no positive control pulse in the case where masses are to be decelerated to zero.

8. Drive system according to one of Claims 5 to 7, characterised in that the set-value control generator (6) comprises a pulse generator for positive pulses, a pulse generator for negative pulses and a ramp generator, the values of which can be adjusted externally.

9. Drive system according to Claim 8, characterised in that a microprocessor (8) is provided for controlling the pulse generators and the ramp generator, in which arrangement the microprocessor can be supplied with the values concerning the input flow at the beginning and the end of the ramp ($Q_{1e}$, $Q_{1a}$), the hydraulic capacity ($C_1$), the mass (M) to be driven, the piston area ($A_{1,2}$) of the motor (1) and the length in time ($t_R$) or the slope of the ramp ($K_S$).

10. Drive system according to one of Claims 5 to 9, characterised in that a low-pass filter (25) is connected between the set-value control generator (6) and the valve arrangement (5).

## Revendications

1. Procédé pour actionner un système de commande hydrostatique ou pneumatique pour des masses (M) à accélérer et à freiner, comportant un moteur (1) linéaire ou rotatif, une source de pression (2, 3) hydraulique ou pneumatique et un dispositif de soupape (5) dont l'ouverture de passage (20) peut être commandée pour le débit d'un flux de travail ($Q_{11}$) ajustable, qui sert de support aux pressions de travail (p) variables, de sorte que, en fonction de la pression de travail à attendre, il se produit un volume de compression ($V_k$) du milieu hydraulique ou pneumatique en regard de l'état initial, caractérisé en ce que le changement du flux de travail ($Q_{11}$) d'une valeur initiale ($Q_{1a}$) à une valeur finale ($Q_{1e}$) est opérée comme suit:

en premier lieu à partir d'une valeur initiale ($Q_{1a}$), est produite une croissance par saut, du flux de volume ($D_1$) ou une décroissance ($-D_3$), selon le signe du changement;

ensuite, dans le domaine moyen, est effectué un changement progressif du flux de volume, également en concordance avec le signe du changement;

en définitive, au voisinage de la valeur finale ($Q_{1e}$), est produite — selon le signe du changement — une décroissance par saut du flux de volume ($-D_2$) ou respectivement une croissance, le changement par saut, du flux de volume ($D_1$, $-D_2$, $-D_3$) — ou une partie du changement du flux de volume — étant choisis en relation avec le volume de compression ($V_k$).

2. Procédé selon la revendication 1, caractérisé en ce que le changement du flux de volume, dans le domaine moyen entre valeur initiale ($Q_{1a}$) et valeur finale ($Q_{1e}$), commence par un abaissement du changement absolu de vitesse et se convertit en un accroissement du changement absolu de vitesse.

3. Procédé selon la revendication 1 ou 2, caractérisé en ce que lors d'une croissance du courant de travail ($Q_{11}$), en particulier dans le démarrage d'une masse (M) au repos, la croissance par saut du flux de volume ($D_1$) présente une partie pour la prise en compte d'une pression antagoniste ($-G$) et d'une force de frottement ($F_R$), ladite croissance étant au total plus grande que la partie correspondante au volume de compression ($V_k$).

4. Procédé selon la revendication 1 à 3, caractérisé en ce que, lors d'une décroissance du flux de travail ($Q_{11}$), notamment dans le ralentissement d'une masse (M) en mouvement, la croissance par saut du volume proche de la valeur finale ($Q_{1e}$) en considérant que la pression antagoniste s'atténuant est plus petite que le volume de compression ($V_k$), correspondant, en particulier dans le cas de freinage à zéro, ladite décroissance échappant à la croissance saccadée de volume.

5. Système de commande hydrostatique ou pneumatique pour des masses (M) à accélérer et à freiner, avec un moteur (1) linéaire ou rotatif, avec une source de pression (2, 3) hydraulique ou pneumatique, avec un dispositif de soupape (5) dont l'ouverture de passage (20) peut être commandée pour le débit d'un flux modifiable de travail ($Q_{11}$), qui sert de support aux pressions de travail (p) variables, de sorte que, en fonction de la pression de travail en attente, il se produit un volume de compression ($V_k$) du milieu hydraulique ou pneumatique en regard de l'état initial, et avec un générateur de commande (6) de valeur de consigne pour la commande de dispositif de soupape (5), caractérisé en ce que le générateur de commande (6) de valeur de consigne délivre un signal de rampe (U) dépendant du parcours et du temps avec une impulsion de commande positive superposée ($I_1$) au début de montée de la rampe ou encore à l'extrémité de chute de la rampe et avec une impulsion de commande négative superposée ($I_2$) à l'extrémité de montée de la rampe, ou encore ($I_3$) au commencement de chute de la rampe, les amplitudes des impulsions de commande positives et négatives étant choisies en fonction du volume respectif de compression ($V_k$).

6. Système de commande selon la revendication 5, caractérisé en ce que, dans le démarrage d'une masse (M) au repos, à l'impulsion positive de commande ($I_1$) sont superposées d'autres impulsions ($I_G$, $I_R$) pour tenir compte d'une pression antagoniste (G) et de forces de frottement ($F_R$).

7. Système de commande selon la revendication 5 ou 6, caractérisé en ce que, dans le cas de masses à freiner à zéro, l'impulsion positive de commande disparaît.

8. Système de commande selon l'une des revendications 5 à 7, caractérisé en ce que le générateur de commande (6) de valeur nominale englobe un générateur d'impulsions pour impulsions positives, un générateur d'impulsions pour impulsions négatives et un générateur de rampes, dont les valeurs sont réglables de l'extérieur.

9. Système de commande selon la revendication 8, caractérisé en ce qu'un microprocesseur (8) est prévu pour l'asservissement des générateurs d'impulsions et du générateur de rampes, système dans lequel les valeurs concernant le courant d'entrée au début et à la fin de la rampe ($Q_{1e}$, $Q_{1a}$), la capacité hydraulique ($C_1$), la masse (M) à actionner, les faces de piston ($A_1$, $A_2$) du moteur (1) et la longueur de durée dans le temps ($t_R$) des rampes, ou encore la pente de la rampe ($K_S$) peuvent être introduits dans le microprocesseur.

10. Système de commande selon l'une des revendications 5 à 9, caractérisée en ce que, entre un générateur de commande (6) de valeur nominale et un dispositif de soupape (5), est mis en circuit un filtre passe-bas (25).

FIG.1

FIG.2

FIG. 3